# EUROPEAN PATENT APPLICATION

(11) **EP 4 597 632 A1**
(43) Date of publication of application: **06.08.2025**
(21) Application number: 23871391.1
(22) Date of filing: 18.07.2023
(51) Int. Cl.: H01M 4/62, C01G 53/00, C08K 5/521, C08K 5/5313, C08K 5/5317, C08L 29/04, H01M 4/131, H01M 4/1391, H01M 4/36, H01M 4/525

(54) **POSITIVE ELECTRODE FOR SECONDARY BATTERY, PRODUCTION METHOD THEREFOR, AND SECONDARY BATTERY**

(30) Priority: 28.09.2022 JP 2022155539
(71) Applicant: Panasonic Intellectual Property Management Co., Ltd., Kadoma-shi, Osaka 571-0057 (JP)
(72) Inventor: SAKO, Honami, Kadoma-shi, Osaka 571-0057 (JP)
(74) Representative: Novagraaf International SA
(86) International application number: PCT/JP2023/026327
(87) International publication number: WO 2024/070147

(57) **Abstract**

A positive electrode 13 for secondary battery of the present disclosure includes a positive electrode current collector 11 and a positive electrode active material layer 12 supported on the positive electrode current collector 11, where the positive electrode active material layer 12 includes a positive electrode active material and polyvinyl alcohol modified with a phosphorus compound. A method for manufacturing the positive electrode 13 for secondary battery includes: preparing a polymer solution including polyvinyl alcohol, a phosphorus compound, and a solvent; preparing a positive electrode slurry including the polymer solution and the positive electrode active material; and applying the positive electrode slurry to the positive electrode current collector 11 to form the positive electrode active material layer.

## Description

### TECHNICAL FIELD

The present disclosure relates to a positive electrode for secondary battery, a method for manufacturing the same, and a secondary battery.

### BACKGROUND ART

An existing lithium secondary battery has an operating voltage with an upper limit of around 4.3 V. A high operating voltage is advantageous for improving output and energy density of the lithium secondary battery. However, such a high operating voltage may cause deterioration of the lithium secondary battery in an earlier stage due to side reactions such as an electrolyte decomposition reaction or the like.

For example, Patent Literatures 1 and 2 are known as describing techniques for addressing the issue of a decomposition reaction of an electrolyte. Patent Literature 1 describes a coated positive electrode active material having a coating that includes at least one selected from a specific phosphonic acid and a specific phosphite triester. Patent Literature 2 describes adding a specific phosphorus compound and a specific phosphate diester salt to a non-aqueous electrolyte.

### CITATION LIST

### Patent Literature

Patent Literature 1: WO 2017/126276
Patent Literature 2: WO 2016/199823

### SUMMARY OF INVENTION

### Technical Problem

The side reactions in the positive electrode of a secondary battery become apparent when the secondary battery is stored in a high-temperature environment. In other words, one of the important issues is to suppress the decrease in discharge capacity, where the decrease is caused by storing the secondary battery at high temperatures. The present disclosure aims to provide a positive electrode for secondary battery, the electrode is capable of suppressing side reactions in the positive electrode during storing the secondary battery at high temperatures.

### Solution to Problem

The present disclosure provides a positive electrode for secondary battery,
the positive electrode including: a positive electrode current collector; and
a positive electrode active material layer supported on the positive electrode current collector,
where the positive electrode active material layer includes a positive electrode active material and polyvinyl alcohol modified with a phosphorus compound.

### Advantageous Effects of Invention

According to the present disclosure, it is possible to provide a positive electrode for secondary battery, the positive electrode is capable of suppressing side reactions in the positive electrode during storing the secondary battery at high temperatures.

### BRIEF DESCRIPTION OF DRAWINGS

FIG. 1 is a cross-sectional view showing a schematic configuration of a positive electrode for secondary battery according to Embodiment 1.
FIG. 2A is a diagram showing a reaction formula of PVA with a specific phosphorus compound represented by Chemical formula (3).
FIG. 2B is a diagram showing a reaction formula of PVA with a specific phosphorus compound represented by Chemical formula (1).
FIG. 3A is a process chart showing a method for manufacturing a positive electrode for secondary battery.
FIG. 3B is a process chart showing another method for manufacturing a positive electrode for secondary battery.
FIG. 4 is a cross-sectional view showing a schematic configuration of a lithium secondary battery according to Embodiment 2.
FIG. 5A is an optical photograph of a surface of a Li metal foil and a surface of a separator facing a negative electrode, in a lithium secondary battery of Example 1.
FIG. 5B is an optical photograph of a surface of a Li metal foil and a surface of a separator facing a negative electrode, in a lithium secondary battery of Comparative Example 1.

### DESCRIPTION OF EMBODIMENTS

Embodiments of the present disclosure are described below with reference to the drawings. The present disclosure is not limited to the following embodiments.

### (Embodiment 1)

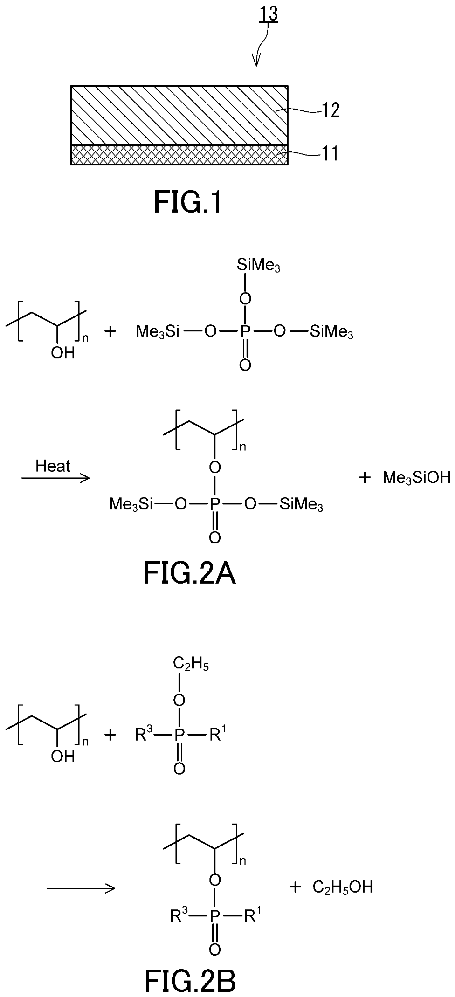

FIG. 1 is a cross-sectional view showing a schematic configuration of a positive electrode 13 for secondary battery according to Embodiment 1. The positive electrode 13 for secondary battery includes a positive electrode current collector 11 and a positive electrode active material layer 12. The positive electrode active material layer 12 is supported on the positive electrode current collector 11. The positive electrode active material layer 12 includes a positive electrode active material and polyvinyl alcohol modified with a phosphorus compound. In the present description, the polyvinyl alcohol modified with a phosphorus compound may be described as "modified PVA". The positive electrode 13 for secondary battery may be described simply as "positive electrode 13". "Modifying polyvinyl alcohol with a phosphorus compound" means that a phosphorus compound is introduced into a molecular chain of polyvinyl alcohol.

The modified PVA serves as a binder in the positive electrode active material layer 12. Since the structure derived from the phosphorus compound exhibits an oxidation resistance effect, compared to PVA, the modified PVA exhibits a higher effect in suppressing side reactions in the positive electrode 13. The side reactions to be suppressed include decomposition of an electrolyte and elution of a metal element from the positive electrode active material. With suppressions of the side reactions, decrease in discharge capacity is suppressed.

The phosphorus compound can be a compound including phosphorus and oxygen. In detail, the phosphorus compound includes at least one selected from a group consisting of a compound represented by Chemical formula (1), a compound represented by Chemical formula (2), and a compound represented by Chemical formula (3). The compound represented by Chemical formula (1) and the compound represented by Chemical formula (2) are organic phosphorus compounds each having a carbon-phosphorus bond. These phosphorus compounds can easily modify PVA.

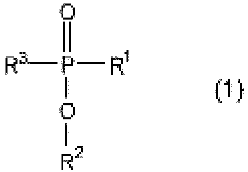

In Chemical formula (1), R² represents a direct bond to a carbon atom included in a main chain of a modified PVA. R¹ and R³ each independently represent an alkyl group having 1 to 17 carbon atoms. R¹ and R³ may be, each independently an alkyl group having 5 to 17 carbon atoms.

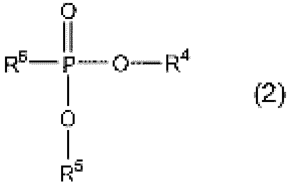

In Chemical formula (2), R⁴ and R⁵ each independently represent a hydrogen atom, a methyl group, an ethyl group, an alkylsilyl group having 1 to 6 carbon atoms, or a direct bond to a carbon atom included in a main chain of a modified PVA. At least one selected from R⁴ and R⁵ represents a direct bond to a carbon atom included in the main chain of the modified PVA. When R⁴ and R⁵ each include the above-described bond, the bonds are bonds to a main chain of a single PVA molecule or bonds to main chains of different PVA molecules. R⁶ represents an alkyl group having 1 to 17 carbon atoms. R⁶ may be an alkyl group having 5 to 17 carbon atoms. The carbon number in the alkylsilyl group may be 1 to 3.

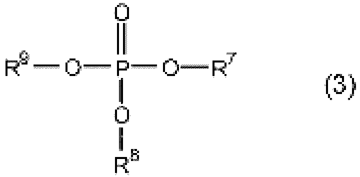

In Chemical formula (3), R⁷, R⁸ and R⁹ each independently represent a hydrogen atom, a methyl group, an ethyl group, an alkylsilyl group having 1 to 6 carbon atoms, or a direct bond to a carbon atom included in a main chain of a modified PVA. At least one selected from R⁷, R⁸ and R⁹ represents a direct bond to a carbon atom included in the main chain of the modified PVA. When two or more of R⁷, R⁸ and R⁹ include the above-described bonds, the bonds are bonds to a main chain of a single PVA molecule or bonds to main chains of different PVA molecules. The number of carbons in the alkylsilyl group may be 1 to 3.

FIG. 2A is a diagram showing a reaction formula of PVA with a specific phosphorus compound represented by Chemical formula (3). In the reaction formula of FIG. 2A, the phosphorus compound is tris(trimethylsilyl)phosphate (TMSP). The trimethylsilyl group reacts with the hydroxyl group of the PVA to produce trimethylsilanol. A part of the phosphorus compound other than the trimethylsilyl group is bonded as a residue to the main chain of the PVA. In FIG. 2A, the remaining two trimethylsilyl groups can also form bonds to a single PVA molecule or different PVA molecules.

FIG. 2B is a diagram showing a reaction formula of PVA with a specific phosphorus compound represented by Chemical formula (1). In the reaction formula of FIG. 2B, the phosphorus compound has a group capable of reacting with the hydroxyl group of the PVA. The group capable of reacting with the hydroxyl group of the PVA is an ethyl group. The group capable of reacting with the hydroxyl group of the PVA may be a hydroxyl group, an alkylsilyl group, or the like. The ethyl group of the phosphorus compound and the hydroxyl group of the PVA are separated to produce ethanol as a byproduct. The remaining part of the phosphorus compound is bonded to the main chain of the PVA.

As can be understood from the reaction formulas in FIG. 2A and FIG. 2B, the phosphorus compound represented by Chemical formula (1), the phosphorus compound represented by Chemical formula (2), and the phosphorus compound represented by Chemical formula (3) can be residues bonded to the main chain of the PVA.

Since the phosphorus compound represented by Chemical formula (2) and the phosphorus compound represented by Chemical formula (3) can have multiple bonding sites, these compounds can impart the modified PVA with a cross-linked structure.

In the positive electrode active material layer 12, the modified PVA may adhere to a surface of each particle of the positive electrode active material. The modified PVA may cover at least a part of the surface of the particle of the positive electrode active material. With the configuration, direct contact between the positive electrode active material and the electrolyte is prevented, whereby the oxidation resistance effect of the modified PVA is likely to be exhibited. In the case where the positive electrode 13 is used in a solid-state battery, direct contact between the positive electrode active material and the solid electrolyte is prevented. For example, the modified PVA may be localized on the surface of the particle of the positive electrode active material. Alternatively, the modified PVA may be uniformly dispersed in the positive electrode active material layer 12.

The proportion of the phosphorous compound to the hydroxyl groups included in the modified PVA is not particularly limited. As long as the PVA is modified with the phosphorous compound, a desired effect is exhibited. In one example, the proportion of the phosphorous compound to the hydroxyl groups included in the modified PVA is 10% or more on a molar basis. In this case, since the oxidation resistance effect imparted by the phosphorus compound is more fully exhibited, the amount of modified PVA used in the positive electrode 13 can be reduced. The upper limit of the proportion is not particularly limited. The upper limit of the proportion is, for example, 95%. The proportion can be examined by an NMR measurement.

For example, when the phosphorus compound is represented by Chemical formula (1), Chemical formula (2) or Chemical formula (3), a ratio (M2/M1) of an amount of substance M2 of P atoms to an amount of substance M1 of hydroxyl groups remaining in the modified PVA is 10% or more.

In the positive electrode 13, the positive electrode active material is not particularly limited. As a positive electrode active material, a lithium-containing transition metal oxide, a lithium-containing transition metal phosphate, a transition metal fluoride, a poly-anion material, a fluorinated poly-anion material, a transition metal sulfide, a transition metal oxy sulfide, a transition metal oxy nitride or the like can be used. In particular, in the case where the lithium-containing transition metal oxide or the lithium-containing transition metal phosphate is used as the positive electrode active material, the cost for manufacturing the battery can be reduced, and the average discharge voltage can be increased. Examples of the lithium-containing transition metal oxide include lithium cobalt oxide, lithium nickel cobalt aluminum oxide, lithium nickel cobalt manganese oxide, and lithium nickel manganese oxide. Examples of the lithium-containing transition metal phosphate include lithium iron phosphate, lithium vanadium phosphate, lithium cobalt phosphate, and lithium nickel phosphate.

Among these, the positive electrode active material may include a lithium nickel oxide having a layered rock salt-type crystal structure. In the lithium nickel oxide, a proportion of Ni included in metal elements except Li may be 50 atom% or more. The lithium nickel oxide may include other transition metals. The lithium nickel oxide is useful for achieving a high operating voltage. Application of the modified PVA of the present embodiment may suppress elution of metal ions from the positive electrode active material. Since nickel is likely to be eluted from the positive electrode active material, the technique of the present disclosure is particularly expected to have an effect of suppressing elution.

The lithium nickel oxide may be represented by the following Composition formula (I). An element M1 is at least one selected from the group consisting of V, Co, and Mn. An element M2 is at least one selected from the group consisting of Mg, Al, Ca, Ti, Cu, Zn, and Nb. Composition formula (I) satisfies 0.9 ≤ α ≤ 1.10, -0.05 ≤ β ≤ 0.05, 0.5 ≤ x1 < 1, 0 ≤ x2 ≤ 0.5, and 0 < 1-x1-x2 ≤ 0.5.

Li_{α}NiₓtM1ₓ₂M2₍₁₋ₓ₁₋ₓ₂₎O_{2+β}... (I)

The positive electrode active material layer 12 may include another material such as an ion conductor and a conductive additive. The positive electrode active material layer 12 may include a binder other than the modified PVA.

The positive electrode current collector 11 is, for example, a foil made of a metal material such as aluminum, an aluminum alloy, stainless steel, titanium, or a titanium alloy.

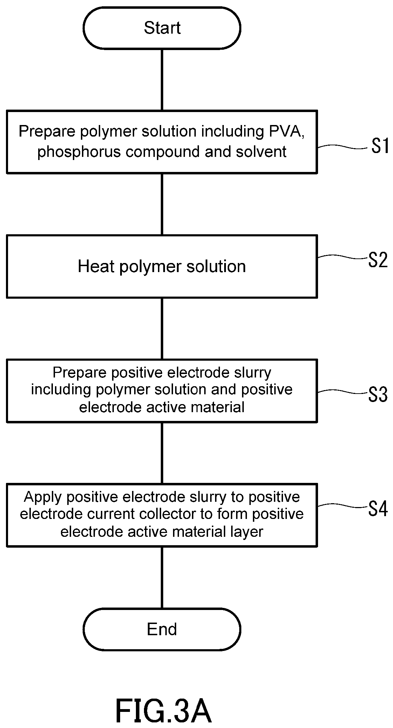

The positive electrode 13 can be manufactured by the following method. FIG. 3A is a process chart showing the method for manufacturing the positive electrode 13.

In Step S1, a polymer solution including PVA, a phosphorus compound, and a solvent, is prepared.

As explained above, the phosphorus compound includes at least one selected from the group consisting of a compound represented by Chemical formula (1), a compound represented by Chemical formula (2), and a compound represented by Chemical formula (3).

The phosphorus compound at a raw material stage is in a state before being bonded to the PVA, and its structure can be distinguished from the structure after being bonded to the modified PVA. That is, in the phosphorus compound represented by Chemical formula (1), R² represents a hydrogen atom, a methyl group, an ethyl group, or an alkylsilyl group having 1 to 6 carbon atoms. R¹ and R³ each are an alkyl group having 1 to 17 carbon atoms. In the phosphorus compound represented by Chemical formula (2), R⁴ and R⁵ each independently represent a hydrogen atom, a methyl group, an ethyl group, or an alkylsilyl group having 1 to 6 carbon atoms. R⁶ represents an alkyl group having 1 to 17 carbon atoms. In the phosphorus compound represented by Chemical formula (3), R⁷, R⁸, and R⁹ each independently represent a hydrogen atom, a methyl group, an ethyl group, or an alkylsilyl group having 1 to 6 carbon atoms. Since the phosphorus compound has such a structure, the PVA can be modified relatively easily, and oxidation resistance can be imparted to the PVA.

The phosphorus compound preferably includes a silyl phosphite. Since a silyl group is highly reactive, when the phosphorus compound is a silyl phosphite having a silyl group, the reaction between the PVA and the phosphorus compound is likely to proceed.

In detail, in the compound represented by Chemical formula (2), at least one selected from R⁴ and R⁵ can be an alkyl silyl group having 1 to 6 carbon atoms. In the compound represented by Chemical formula (3), at least one selected from R⁷, R⁸ and R⁹ can be an alkylsilyl group having 1 to 6 carbon atoms. In the case where the phosphorus compound has an alkylsilyl group, the reaction between PVA and the phosphorus compound is likely to proceed.

The solvent of the polymer solution is not particularly limited as long as it is a solvent in which the PVA and the phosphorus compound are soluble. Examples of the solvent for the polymer solution include water and N-methylpyrrolidone (NMP). The PVA may be a PVA that does not have any groups other than a hydroxyl group and an acetic acid group, a PVA obtained by substituting a hydroxyl group with a functional group other than the phosphoric acid compound, or a mixture thereof. The saponification degree of the PVA is not particularly limited.

In Step S2, the polymer solution is heated. As explained with reference to FIG. 2A or FIG. 2B, the heating proceeds the reaction in which the phosphorous compound is bonded to the PVA, and the modified PVA is produced. The polymer solution includes the modified PVA. The heating temperature is, for example, 80°C or higher and 150°C or lower. The heating time is, for example, 60 minutes or more and 50 hours or less.

In Step S3, a positive electrode slurry including the polymer solution and a positive electrode active material is prepared. Specifically, a powder of the positive electrode active material is mixed with the polymer solution and stirred. The positive electrode slurry may also include other materials such as a conductive additive.

In Step S4, the positive electrode slurry is applied to the positive electrode current collector 11 to form the positive electrode active material layer 12. Specifically, the positive electrode slurry is applied to the positive electrode current collector 11 to form a coating film. By removing the solvent from the coating film, the positive electrode active material layer 12 is obtained. An example of methods of removing the solvent is to heat the coating film.

The above-described process results in a positive electrode 13 as described with reference to FIG. 1.

The surfaces of particles of the positive electrode active material may be treated with the polymer solution prepared in Step S2 to coat the surface with the modified PVA. For example, after adding particles of the positive electrode active material to the polymer solution, the modified PVA is made adhere to the particles of the positive electrode active material by spray drying. The thus obtained particles of the positive electrode active material each have a surface at least a part thereof is coated with the modified PVA. The positive electrode slurry is prepared using the particles of the positive electrode active material coated with the modified PVA.

Alternatively, the following method may also be employed. By removing the solvent from the polymer solution prepared in Step S2, a powder of modified PVA is obtained. The powder of the modified PVA and the particles of the positive electrode active material are mixed to obtain a mixed powder. The mixed powder is heated to melt the modified PVA, and at least a part of the surface of the particle of the positive electrode active material is coated with the modified PVA.

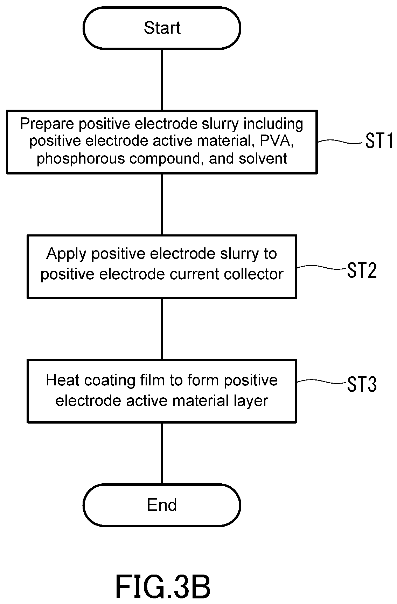

FIG. 3B is a process chart showing another method for manufacturing the positive electrode 13. In Step ST1, a positive electrode slurry is prepared, which includes the positive electrode active material, PVA, a phosphorus compound, and a solvent. In Step ST2, the positive electrode slurry is applied to the positive electrode current collector 11 to form a coating film. In Step ST3, the coating film is heated to form the positive electrode active material layer 12. By heating the coating film, the solvent is removed from the coating film, and at the same time, the reaction in which the phosphorus compound is bonded to the PVA proceeds to produce the modified PVA.

Either of the manufacturing method shown in FIG. 3A and the manufacturing method shown in FIG. 3B can be used to efficiently manufacture the positive electrode 13. According to the manufacturing method shown in FIG. 3A, the modified PVA is produced before preparation of the positive electrode slurry. Therefore, the heating of the polymer solution in Step S2 can be carried out under conditions suitable for producing the modified PVA. According to the manufacturing method shown in FIG. 3B, the process of removing the solvent from the coating film also serves as a process of producing the modified PVA, whereby the number of processes can be reduced.

### (Embodiment 2)

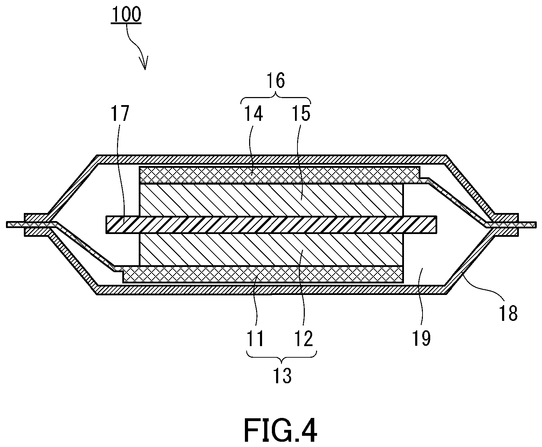

FIG. 4 is a cross-sectional view showing the schematic configuration of a lithium secondary battery 100 according to Embodiment 2. The lithium secondary battery 100 includes a positive electrode 13 as described in Embodiment 1. Use of the positive electrode 13 may improve characteristics such as a discharge capacity and a capacity retention rate of the lithium secondary battery 100.

The lithium secondary battery 100 further includes a negative electrode 16, an electrolyte layer 17, an outer casing 18, and a non-aqueous electrolyte 19. The negative electrode 16 includes a negative electrode current collector 14 and a negative electrode active material layer 15. The negative electrode active material layer 15 is provided on the negative electrode current collector 14. The electrolyte layer 17 is disposed between the positive electrode 13 and the negative electrode 16. The electrolyte layer 17 is a separator. The positive electrode 13, a negative electrode 16, an electrolyte layer 17, and a non-aqueous electrolyte 19 are housed in an outer casing 18.

The negative electrode current collector 14 is a foil made of a metal material, such as stainless steel, nickel, a nickel alloy, copper, or a copper alloy.

The negative electrode active material layer 15 includes a negative electrode active material. The negative electrode active material can be a material capable of occluding and releasing lithium ions. Examples of negative electrode active materials include lithium titanate, graphite, silicon, a silicon compound, and a NiBi alloy.

The negative electrode active material layer 15 may also include other materials such as a conductive additive, an ion conductor, and a binder.

The positive electrode 13, the negative electrode 16, and the electrolyte layer 17 are impregnated with the non-aqueous electrolyte 19. The non-aqueous electrolyte 19 may also fill the internal space of the outer casing 18.

The non-aqueous electrolyte 19 includes a non-aqueous solvent and a lithium salt.

As the non-aqueous solvent, a cyclic carbonate, an aliphatic carbonate, a cyclic ether, an aliphatic ether, a nitrile, an amide or the like can be used. One selected from these solvents can be used, or two or more thereof can be used in combination.

As the lithium salt, lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), bis(perfluoroethylsulfonyl)imidylidene lithium (LiN(SO₂C₂F₅)₂), LiAsF₆, LiCF₃SO₃, lithium difluoro(oxalato)borate or the like may be used. One selected from these electrolyte salts may be used, or two or more thereof may be used in combination.

The electrolyte layer 17 has lithium ion conductivity. As long as the passage of lithium ions is allowed, the material of the electrolyte layer 17 is not particularly limited. The material of the electrolyte layer 17 can be at least one selected from the group consisting of a solid electrolyte, a gel electrolyte, an ion exchange resin membrane of a lithium cation exchange resin or the like, a semi-permeable membrane, and a porous membrane. An electrolyte layer 17 made from these materials can sufficiently ensure the safety of the lithium secondary battery 100. Examples of the solid electrolyte include a sulfide solid electrolyte such as Li₂S-P₂S₅ and an oxide solid electrolyte such as Li₇La₃Zr₂O₁₂ (LLZ). Examples of the gel electrolyte include a gel electrolyte including a fluorine resin such as PVdF. Examples of the ion exchange resin membrane include a cation exchange membrane and an anion exchange membrane. Examples of the porous membrane include a porous membrane made of a polyolefin resin and a porous membrane made of a glass paper obtained by weaving glass fibers into a non-woven fabric.

The shape of the lithium secondary battery 100 is not particularly limited. Various shapes such as a coin-shape, a cylinder, a square, a sheet, a button, flat, and a laminate can be adopted for the shape of the lithium secondary battery 100.

Application of the positive electrode 13 of Embodiment 1 is not limited to the lithium secondary battery 100. The positive electrode 13 can be used in various types of secondary batteries, such as a sodium secondary battery and a magnesium secondary battery. The various types of secondary batteries may be batteries using electrolytes or solid-state batteries.

### (Other Embodiments)

### (Addendum)

The above-mentioned embodiments disclose the following techniques.

### (Technique 1)

A positive electrode for secondary battery, including:
a positive electrode current collector; and
a positive electrode active material layer supported on the positive electrode current collector, wherein
the positive electrode active material layer includes a positive electrode active material, and polyvinyl alcohol modified with a phosphorus compound.

With this configuration, side reactions in the positive electrode of the secondary battery can be suppressed. In particular, side reactions that may occur during storing the secondary battery at high temperatures can be suppressed.

### (Technique 2)

The positive electrode for secondary battery according to Technique 1, wherein a proportion of the phosphorus compound to a hydroxyl group included in the modified polyvinyl alcohol is 10% or more on a molar basis. In this case, since the oxidation resistance effect imparted by the phosphorous compound is more fully exhibited, the amount of modified PVA used in the positive electrode can be reduced.

### (Technique 3)

The positive electrode for secondary battery according to Technique 1 or 2, wherein the modified polyvinyl alcohol adheres to a surface of a particle of the positive electrode active material. With this structure, since direct contact between the positive electrode active material and the electrolyte is prevented, the oxidation resistance effect of the modified PVA is more likely to be exhibited.

### (Technique 4)

The positive electrode for secondary battery according to any one of Techniques 1 to 3, wherein the phosphorus compound includes at least one selected from the group consisting of a compound represented by Chemical formula (1), a compound represented by Chemical formula (2), and a compound represented by Chemical formula (3). These phosphorous compounds can easily modify PVA. Application of the modified PVA of this embodiment may suppress elution of metal ions from the positive electrode active material.

### (Technique 5)

The positive electrode for secondary battery according to any one of Techniques 1 to 4, wherein the positive electrode active material includes a lithium nickel oxide having a layered rock salt-type crystal structure, and in the lithium nickel oxide, a proportion of Ni included in metal elements except Li is 50 atom% or more. Since nickel is easily eluted from the positive electrode active material, the effect of the elution suppression by the Technique of this disclosure is particularly expected.

### (Technique 6)

A secondary battery including:
the positive electrode for secondary battery according to any one of Techniques 1 to 5;
a negative electrode; and
a separator disposed between the positive electrode and the negative electrode.

With this configuration, the characteristics of the secondary battery, such as discharge capacity and capacity retention rate, can be improved.

### (Technique 7)

A method for manufacturing a positive electrode for secondary battery, including:
preparing a polymer solution including polyvinyl alcohol, a phosphorus compound and a solvent;
preparing a positive electrode slurry including the polymer solution and a positive electrode active material; and
applying the positive electrode slurry to a positive electrode current collector to form a positive electrode active material layer.

### (Technique 8)

A method for manufacturing a positive electrode for secondary battery, including:
preparing a positive electrode slurry including a positive electrode active material, polyvinyl alcohol, a phosphorus compound, and a solvent; and
applying the positive electrode slurry to a positive electrode current collector to form a positive electrode active material layer.

With the configurations according to Techniques 7 and 8, the positive electrode for secondary battery of the present disclosure can be manufactured efficiently.

### (Technique 9)

The method according to Technique 7 or 8, wherein the phosphorus compound includes silyl phosphite. Since a silyl group is highly reactive, in the case where the phosphorus compound is a silyl phosphite having a silyl group, the reaction between the PVA and the phosphorus compound is likely to proceed.

### (Technique 10)

The method according to any one of Techniques 7 to 9, wherein the phosphorous compound includes at least one selected from the group consisting of a compound represented by Chemical formula (1), a compound represented by Chemical formula (2), and a compound represented by Chemical formula (3). Since the phosphorus compound has such a structure, the PVA can be modified relatively easily, and oxidation resistance can be imparted to the PVA.

### (Technique 11)

The method according to Technique 10, wherein in the compound represented by the Chemical formula (2), at least one selected from R⁴ and R⁵ is the alkylsilyl group having 1 to 6 carbon atoms, and in the compound represented by the Chemical formula (3), at least one selected from R⁷, R⁸ and R⁹ is the alkylsilyl group having 1 to 6 carbon atoms. In the case where the phosphorus compound has an alkylsilyl group, the reaction between the PVA and the phosphorus compound is likely to proceed.

### EXAMPLES

### (Example 1)

PVA (weight average molecular weight: approximately 254,000) was dissolved in N-methylpyrrolidone (NMP) at a concentration of 7 wt% to prepare a PVA NMP solution. Tris(trimethylsilyl)phosphonic acid (TMSP) was added to the PVA NMP solution to obtain a polymer solution. The concentration of TMSP in the polymer solution was adjusted such that a molar ratio of the silyl groups included in the TMSP to the hydroxyl groups included in the PVA was (silyl groups):(hydroxyl groups) = 1:4. The polymer solution was stirred for 24 hours at 90°C. In this way, a polymer solution including PVA modified with a phosphorus compound was obtained.

Next, the polymer solution, lithium nickel cobalt manganese oxide (NCM), and acetylene black (AB) were mixed to prepare a positive electrode slurry. A mass ratio of these materials in the positive electrode active material layer was (NCM):(AB):(modified PVA) = 98:1:1.

Next, the positive electrode slurry was applied to an aluminum foil to form a coating film. The coating film was dried to form a positive electrode active material layer. In this way, a positive electrode of Example 1 was obtained.

The positive electrode of Example 1, a Li metal foil as a counter electrode, a separator, and an electrolyte were used to produce a lithium secondary battery of Example 1. As the separator, a microporous membrane made of polyolefin was used. The concentration of LiPF₆ in the electrolyte was 1.35 mol/liter. The electrolyte solvent included fluoroethylene carbonate (FEC), ethylene carbonate (EC), ethyl methyl carbonate (EMC), and dimethyl carbonate (DMC) in a volume ratio of FEC:EC:EMC:DMC = 10:10:5:75.

### (Example 2)

A positive electrode of Example 2 was prepared in the same way as in Example 1, except that the concentration of the TMSP in the polymer solution was adjusted such that a molar ratio of the silyl group included in the TMSP to the hydroxyl group included in the PVA was (silyl group):(hydroxyl group) = 3:4. Using the positive electrode of Example 2, a lithium secondary battery of Example 2 was produced in the same way as in Example 1.

### (Comparative Example 1)

A positive electrode slurry was prepared by mixing PVDF, lithium cobalt manganese oxide (NCM), and acetylene black (AB). A mass ratio of these materials in the positive electrode active material layer was (NCM):(AB):(PVDF) = 98:1:1. The positive electrode slurry was applied to an aluminum foil to form a coating film. The coating film was dried to form a positive electrode active material layer. In this way, a positive electrode of Comparative Example 1 was obtained. Using the positive electrode of Comparative Example 1, a lithium secondary battery of Comparative Example 1 was produced by the same method as in Example 1.

### (Comparative Example 2)

A positive electrode of Comparative Example 2 was produced by the same method as in Comparative Example 1, except that PVA was used instead of PVDF. Using the positive electrode of Comparative Example 2, a lithium secondary battery of Comparative Example 2 was produced by the same method as in Example 1.

### [Charge and discharge test]

A charge and discharge test of the lithium secondary batteries of Examples and Comparative Examples was carried out by the following procedure. An initial charge and discharge was carried out at a current value of 0.1 C at an ambient temperature of 25°C. Specifically, constant current charge was carried out at a current value of 0.1 C until the voltage reached 4.5 V. After that, constant current discharge was carried out until the voltage reached 2.5 V at a current value of 0.1 C, and the initial discharge capacity was measured. The initial discharge capacities of the lithium secondary batteries in Examples and Comparative Examples are as shown in Table 1. The discharge capacity is the discharge capacity per unit mass of the positive electrode active material.

Next, constant current charge was carried out at a current value of 0.1 C until the voltage reached 4.5 V. After that, the lithium secondary battery was stored for 72 hours at an ambient temperature of 55°C while maintaining a voltage of 4.5 V. Next, discharge was carried out at a current value of 0.1 C and at an ambient temperature of 25°C, thereby measuring the discharge capacity after the high-temperature storage. The discharge capacities of the lithium secondary batteries in Examples and Comparative Examples after the high-temperature storage are shown in Table 1.

The proportion (percentage) of the discharge capacity after high-temperature storage to the initial discharge capacity was calculated as the "recovery rate". The results are shown in Table 1.

**[Table 1]**

| | Binder | Initial discharge capacity [mAh/g] | Discharge capacity after high temperature storage [mAh/g] | Recovery rate [%] |
|---|---|---|---|---|
| Comparative Example 1 | PVDF | 207.67 | 196.50 | 94.6 |
| Comparative Example 2 | PVA | 202.57 | 190.08 | 93.8 |
| Example 1 | Modified PVA (25%) | 205.13 | 209.69 | 102.2 |
| Example 2 | Modified PVA (75%) | 204.07 | 205.85 | 100.9 |

The recovery rates of the lithium secondary batteries in Comparative Example 1 and Comparative Example 2 were low. When lithium secondary batteries are stored at high temperature in a charged state, a decomposition reaction of the electrolyte is most likely to occur. In the lithium secondary batteries in Comparative Example 1 and Comparative Example 2, it is presumed that the decomposition reaction of the electrolyte progressed due to storage at high temperatures, whereby the discharge capacity decreased significantly.

In contrast, the lithium secondary batteries in Example 1 and Example 2 showed high recovery rates. It is presumed that the presence of the modified PVA suppressed side reactions such as the decomposition reaction of the electrolyte in the positive electrode. In the lithium secondary batteries, fine interfaces are formed in the active material as a result of charge and discharge, and the electrolyte may penetrate into the interfaces, whereby a capacity unused in the previous cycle may appear in the next cycle. In this case, as in Examples 1 and 2, a discharge capacity in the latter cycle may exceed the discharge capacity in the former cycle.

### [Visual Observation]

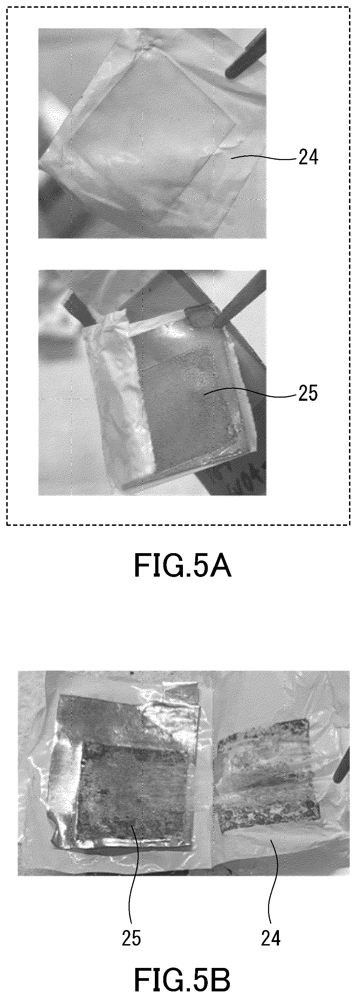

After the charge and discharge test, the lithium secondary batteries of Example 1 and Comparative Example 1 were disassembled and visually observed. FIG. 5A is an optical photograph of a surface of a Li metal foil 25 and a surface of a separator 24 facing the negative electrode, in the lithium secondary battery of Example 1. FIG. 5B is an optical photograph of a surface of a Li metal foil 25 and a surface of the separator 24 facing the negative electrode, in the lithium secondary battery of Comparative Example 1.

As shown in FIG. 5B, black objects adhered to the surface of the separator 24 and the surface of the Li metal foil 25 of the lithium secondary battery of Comparative Example 1. On the other hand, as shown in FIG. 5A, the amount of black objects adhering to the surface of the separator 24 and the surface of the Li metal foil 25 of the lithium secondary battery of Example 1 was apparently small. This suggests that in the lithium secondary battery of Example 1, side reactions in the positive electrode, such as the elution of metal ions (Ni ions, Mn ions, and Co ions) from the positive electrode to the negative electrode and the decomposition of the electrolyte, were suppressed.

### INDUSTRIAL APPLICABILITY

The technique of this disclosure is useful for a secondary battery that requires a binder.

## Claims

1. A positive electrode for secondary battery, comprising:
a positive electrode current collector; and
a positive electrode active material layer supported on the positive electrode current collector, wherein
the positive electrode active material layer comprises a positive electrode active material, and polyvinyl alcohol modified with a phosphorus compound.

2. The positive electrode for secondary battery according to claim 1, wherein
a proportion of the phosphorus compound to a hydroxyl group included in the modified polyvinyl alcohol is 10% or more on a molar basis.

3. The positive electrode for secondary battery according to claim 1, wherein
the modified polyvinyl alcohol adheres to a surface of a particle of the positive electrode active material.

4. The positive electrode for secondary battery according to claim 1, wherein
the phosphorus compound comprises at least one selected from the group consisting of a compound represented by Chemical formula (1), a compound represented by Chemical formula (2), and a compound represented by Chemical formula (3): 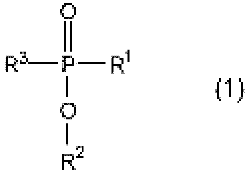
where R² represents a direct bond to a carbon atom included in a main chain of the modified polyvinyl alcohol, and
R¹ and R³ each independently represent an alkyl group having 1 to 17 carbon atoms; 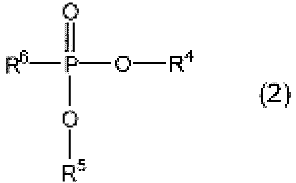
where R⁴ and R⁵ each independently represent a hydrogen atom, a methyl group, an ethyl group, an alkylsilyl group having 1 to 6 carbon atoms, or a direct bond to a carbon atom included in a main chain of the modified polyvinyl alcohol,
at least one selected from R⁴ and R⁵ represents the bond, and
when R⁴ and R⁵ each comprise the bond, the bonds are bonds to a main chain of a single polyvinyl alcohol molecule or bonds to main chains of different polyvinyl alcohol molecules, and
R⁶ represents an alkyl group having 1 to 17 carbon atoms; and 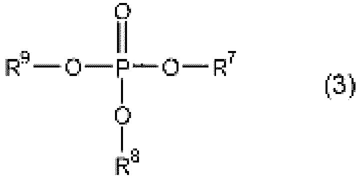
where R⁷, R⁸ and R⁹ each independently represent a hydrogen atom, a methyl group, an ethyl group, an alkylsilyl group having 1 to 6 carbon atoms, or a direct bond to a carbon atom included in a main chain of the modified polyvinyl alcohol,
at least one selected from R⁷, R⁸ and R⁹ represents the bond, and
when two or more selected from R⁷, R⁸ and R⁹ each comprise the bond, the bonds are bonds to a main chain of a single polyvinyl alcohol molecule or bonds to main chains of different polyvinyl alcohol molecules.

5. The positive electrode for secondary battery according to claim 1, wherein
the positive electrode active material comprises a lithium nickel oxide having a layered rock salt-type crystal structure, and
in the lithium nickel oxide, a proportion of Ni included in metal elements except Li is 50 atom% or more.

6. A secondary battery comprising:
the positive electrode for secondary battery according to claim 1;
a negative electrode; and
a separator disposed between the positive electrode and the negative electrode.

7. A method for manufacturing a positive electrode for secondary battery, comprising:
preparing a polymer solution comprising polyvinyl alcohol, a phosphorus compound and a solvent;
preparing a positive electrode slurry comprising the polymer solution and a positive electrode active material; and
applying the positive electrode slurry to a positive electrode current collector to form a positive electrode active material layer.

8. A method for manufacturing a positive electrode for secondary battery, comprising:
preparing a positive electrode slurry comprising a positive electrode active material, polyvinyl alcohol, a phosphorus compound, and a solvent; and
applying the positive electrode slurry to a positive electrode current collector to form a positive electrode active material layer.

9. The method according to claim 7, wherein
the phosphorus compound comprises silyl phosphite.

10. The method according to claim 7, wherein
the phosphorous compound comprises at least one selected from the group consisting of a compound represented by Chemical formula (1), a compound represented by Chemical formula (2), and a compound represented by Chemical formula (3): 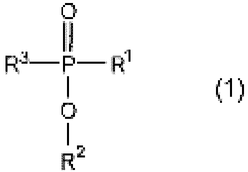
where R² represents a hydrogen atom, a methyl group, an ethyl group, or an alkylsilyl group having 1 to 6 carbon atoms, and
R¹ and R³ represent alkyl groups having 1 to 17 carbon atoms; 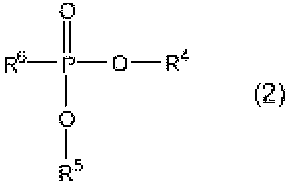
where R⁴ and R⁵ each independently represent a hydrogen atom, a methyl group, an ethyl group, or an alkylsilyl group having 1 to 6 carbon atoms, and
R⁶ represents an alkyl group having 1 to 17 carbon atoms; and 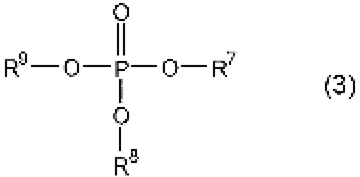
where R⁷, R⁸, and R⁹ each independently represent a hydrogen atom, a methyl group, an ethyl group, or an alkylsilyl group having 1 to 6 carbon atoms.

11. The method according to claim 10, wherein
in the compound represented by the Chemical formula (2), at least one selected from R⁴ and R⁵ is the alkylsilyl group having 1 to 6 carbon atoms, and
in the compound represented by the Chemical formula (3), at least one selected from R⁷, R⁸ and R⁹ is the alkylsilyl group having 1 to 6 carbon atoms.
